# EUROPEAN PATENT SPECIFICATION

(11) **EP 3 153 315 B1**
(45) Date of publication and mention of the grant of the patent: **22.07.2020**
(21) Application number: 15188317.0
(22) Date of filing: 05.10.2015
(51) Int. Cl.: B32B 15/20, B32B 3/26, B32B 15/18, E04C 2/36, E04C 2/292, E04C 2/34, B32B 7/04

(54) **METHOD FOR MANUFACTURING A WELDED COMPONENT AND USE OF THE COMPONENT**
VERFAHREN ZUR HERSTELLUNG EINES GESCHWEISSTEN BAUTEILS UND VERWENDUNG DES BAUTEILS
PROCÉDÉ DE FABRICATION D'UN COMPOSANT ET UTILISATION DUDIT COMPOSANT

(43) Date of publication of application: 12.04.2017
(73) Proprietor: Outokumpu Oyj, 00180 Helsinki (FI)
(72) Inventor: Lindner, Stefan, D-47877 WILLICH (DE); Fröhlich, Thomas, D-40878 RATINGEN (DE)

(56) References cited:
- WO-A1-2015/117059
- DE-A1-102012 218 686
- GB-A- 1 363 536

## Description

The present invention relates to a method for manufacturing a component by welding metal pieces together so that there is positioned at least one material piece between the metal pieces to be welded together. The invention also relates to the use of the component.

A material construction, which contains at least two different materials fastened to each other, becomes more and more important for transport manufacturing areas like automotive, commercial vehicles, buses or railway vehicles. The so-called "multi-material-design" wants to apply every time the right material to the right place. But the conventional joining methods reach their limits in point of dissimilar joining combinations like steel to aluminium or steel to carbon fiber. One other problem is the different corrosion potentials of the used materials. When there is a direct contact between the sheets or elements, corrosion will attack the ignobly material. The problem will be so much worse when there are wet areas or solutions, like chlorides.

The GB publication 1363536 relates to a product comprising two panels disposed in spaced relation to one another, each of said panels having a plurality of cuts therein defining tabs which are bent relative to said panel to extend toward the other of said panels across substantially the entire space between said panels, pairs of said tabs extending respectively from said panels being disposed in substantially completely overlapping relation to one another, said overlapping tabs being attached to one another to form intermediary members that retain said panels in fixed position relative to one another.

International patent application WO 2015/117059 A1 discloses a method for fastening a first electrically conductive material to a second electrically conductive material using electrical resistance welding, comprising: placing the first and second materials together in physical and electrical contact, the first material having a lower melting point than the second material; placing an electrically conductive fastener that is weldable to the second material and which has a higher melting point than the first material in physical and electrical contact with the first material to form an electrically conductive stack inclusive of the fastener, the first material and the second material; prior to or after the step of placing the fastener to form the stack, applying a sealant between the fastener and the first material; applying an electrical potential across the stack, inducing a current to flow through the stack and causing resistive heating, the resistive heating causing a softening of the first material; urging the fastener through the softened first material toward the second material; after the fastener contacts the second material, welding the fastener to the second material.

The object of the present invention is to eliminate drawbacks of the prior art and to achieve a method for manufacturing a welded component where at least one material piece is positioned between metal pieces to be welded together. The object of the invention is also the use of the component. The essential features of the present invention are enlisted in the appended claims.

According to the present invention as defined in claim 1 at least one protrusion is achieved to at least one of the metal pieces to be welded together. At least one opening is achieved to at least one material piece to be positioned between the metal pieces to be welded so that at least one part of the protrusion in one of the metal pieces to be welded together is taken through the opening. Thus mechanical contact through the upper end of the protrusion with the second metal piece to be welded is achieved. Welding of the metal pieces together is carried out by focusing the weld effect to the surface of the second metal piece which is in connection with the protrusion to the first metal piece to be welded.

In a component manufactured according to the invention at least one of the metal pieces to be welded together is thus provided with at least one protrusion in order to have mechanical contact through the upper end of the protrusion with the second metal piece to be welded. When describing the invention with the term "first metal piece" it is meant the metal piece with the protrusion and with the term "second metal piece" the opposite metal piece whereto the upper end of the protrusion has a mechanical contact. When describing the invention with the term "the upper end of the protrusion" it is meant the end of the protrusion which is opposite to the end of the protrusion fixed with one metal piece before welding. In one embodiment of the invention, both the metal pieces are provided with protrusions in such a manner that the protrusion in one of those metal pieces is not opposite with the protrusion in the opposite metal piece.

A material piece provided with at least one opening will be positioned as an interlayer between the metal pieces to be welded. The opening of the material piece is shaped so that at least one part of the protrusion in one of those metal pieces to be welded together is taken through the opening. The protrusion is positioned to the opening so that any direct contact between the protrusion and the opening is prevented. The part of the protrusion which has been taken through the opening is then mechanically in connection with the surface of the second metal piece to be welded. When the metal pieces are thus positioned to each other, welding according to the invention is carried out by focusing the weld effect to the surface of the metal piece which has contact with the protrusion of the metal piece to be welded. Thus, it is achieved a stacked welded component, consisting of at least one material piece positioned between the welded metal pieces.

According to the invention it is possible to join material combinations which are directly unweldable together and which consists of at least three parts, because the method of the invention makes possible to join two materials as a three part component without direct contact to each other. The material piece with the openings is thus joint as a form closure method or as a form fit connection method to the other sheets, against which the metal pieces to be welded has a material connection to each other Thus, different electrochemical potential for corrosion between the interlayer material and the welded metal pieces is not relevant for the component manufactured with the method of the invention.

The metal pieces to be welded together in accordance with the invention are made of coated steel, stainless steel, aluminium, magnesium, copper or brass. The metal pieces are made of similar material, or the metal pieces are made of materials forming a material combination, which is weldable together. The welding of the metal pieces together is carried out by thermal joining processes such as resistance welding processes, TIG-spot welding or beam welding processes such as laser beam welding or electron beam welding. At least one of the metal pieces to be welded together is provided with at least one protrusion in which case the metal piece is at least partly three-dimensional. The protrusion has a shape of a cone, a pin, a taper or any other geometry which is useful for achieving a mechanical contact with the other metal piece to be welded. Advantageously, the metal piece is provided with several protrusions which are manufactured by a forming process such as injection, clinching, spiring, expanding or hydroforming.

The material piece positioned as an interlayer between the metal pieces to be welded is made of metal-based material, such as coated steel, stainless steel, aluminium, magnesium, copper or brass or it is made of a fiber composite or a cement plate. The interlayer is provided at least one opening which is positioned to the protrusion of the metal piece so that at least a part of the protrusion can be taken through the opening so that any mechanical contact with the interlayer material is prevented. Advantageously, an interlayer has several openings which can be made by perforating the interlayer. The perforation of the interlayer can be manufactured by stamping, punching, boring, cutting or thermal cutting such as laser beam or plasma jet and plasma beam.

According to the invention the metal piece with the protrusions is stacked into the openings of the interlayer. The area of the openings in the interlayer is so shaped that at least one part of the protrusions is taken through the opening in a manner that there is no contact between the interlayer, the protrusions and the metal pieces during and after stacking. In order to prevent the contact between the interlayer and the protrusion before stacking a layer of an isolating material is distributed on the surface of the interlayer. The isolating material is a polymer, fluidity adhesive, a bonding tape, a tape with impregnated fleece material, plastic isolating material or ceramic material. The isolating material avoids the risk of electrochemical insulation, galvanic and contact corrosion between the metal pieces to be welded and the interlayer material. During stacking the interlayer is form-locked and joined because of the position between the openings and protrusions. After stacking and welding of the metal pieces together the interlayer is pressed in a desired manner between the metal pieces in order to have a welded component.

The component manufactured by the method of the invention is used as a connection part or a joining area to join cross members, longitudinal members, front walls, pillars, floor assemblies or a channel to each other for a passenger car, for example as a connection between a b-pillar and a rocker rail. The component can also be used as a connection part or a joining area to join side walls, floor panels, roof or step plates to each other for railway vehicle cars, for example as a connection between a floor plate and a side wall. Further, the component can be used as a connection part or a joining area to join sheets, plates, tubes or profiles for agricultural machines, buses or trucks as well as to join plates and sheets in aerospace or space flight solutions, for example as a connection between a floor plate and a side wall. The component is also useful for building construction, for example as a connection between a building shell and face elements, and for bridge and building construction, for example as an alternative material for reinforced concrete.

Using the component manufactured by the method of the invention it is possible to create a semi-finished product, such as a sandwich sheet, and/or a tailored part. Further the component manufactured by the method of the invention can be utilized as an adaptation member to be connected to at least one other component.

The present invention is described in more details referring to the drawings, wherein
Fig. 1 shows one preferred embodiment of the invention schematically as an a axonometric projection seen on a slant position from above before stacking,
Fig. 2 shows the embodiment of Fig. 1 schematically as a side view after stacking and welding,
Fig. 3 shows one preferred embodiment of the invention schematically as a cut side view after stacking,
Fig. 4 shows one preferred embodiment of the invention schematically as a cut side view after stacking,
Fig. 5 shows one preferred embodiment of the invention schematically as a cut side view after stacking and welding, and
Fig. 6 shows one preferred embodiment of the invention schematically as a cut side view after stacking and welding.

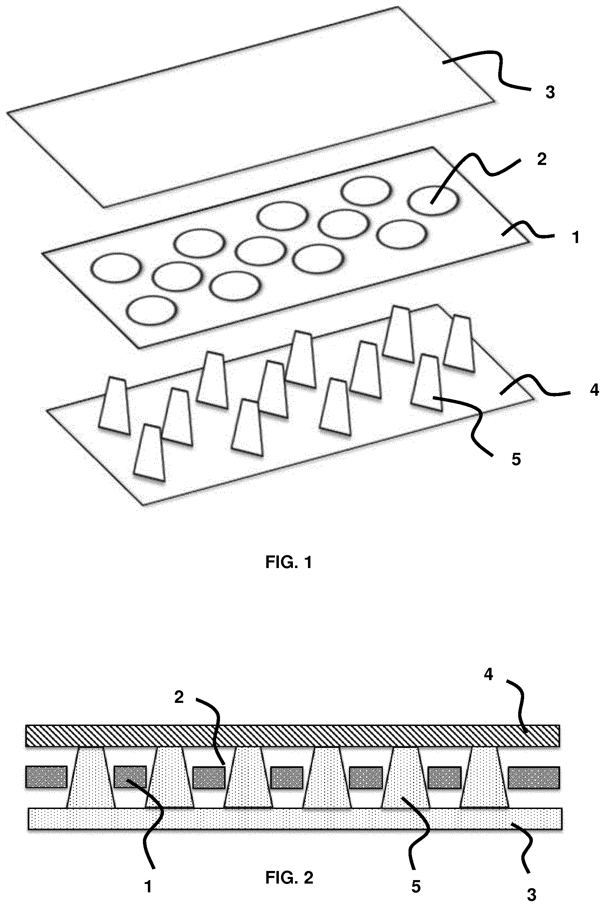

In Fig. 1 an interlayer sheet 1 is provided with holes 2, and the interlayer 1 is positioned between two metal sheets 3 and 4. The metal sheet 3 is structured so that protrusions 5 are shaped on the surface of the metal sheet 3.

In Fig. 2 the metal sheets 3 and 4 are stacked so that the protrusions 5 are partly taken through the holes 3 of the interlayer 1. The metal sheets 3 and 4 have mechanical contacts 6 through upper ends 7 of the protrusions 5. An isolating material achieving isolation between the interlayer 1 and the metal sheets 3 and 4 is not shown.

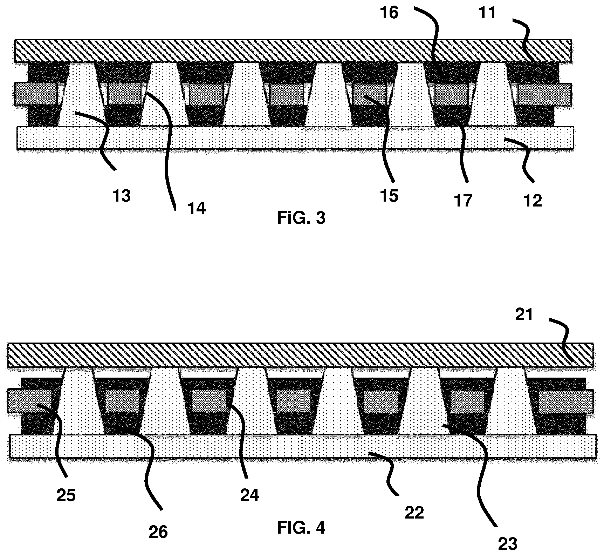

In Fig. 3 the metal sheets 11 and 12 are stacked so that the protrusions 13 are partly taken through the holes 14 in the interlayer 15. The interlayer 15 is supported with two isolating materials 16 and 17 in order to prevent any mechanical contact between the protrusions 13 and the interlayer 15.

In Fig. 4 the metal sheets 21 and 22 are stacked so that the protrusions 23 are partly taken through the holes 24 in the interlayer 25. The interlayer 25 is supported with one isolating material 26 in order to prevent any mechanical contact between the protrusions 23 and the interlayer 25.

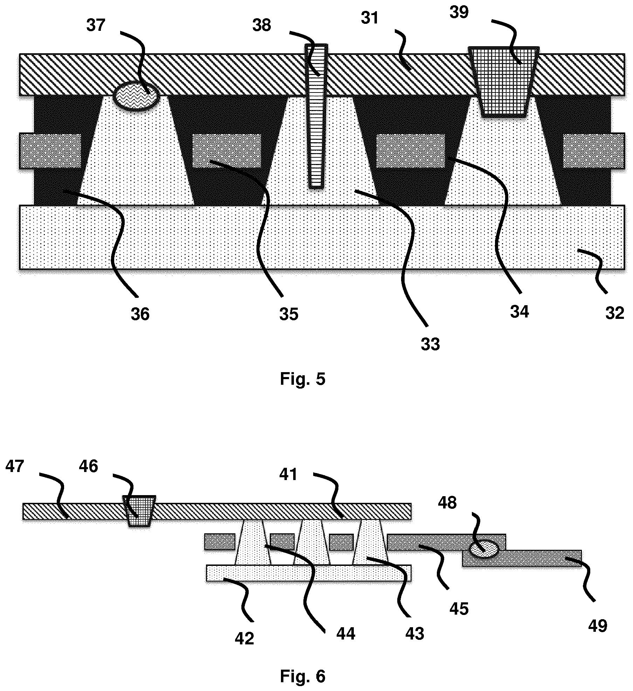

In Fig. 5 the metal sheets 31 and 32 are stacked so that the protrusions 33 are partly taken through the holes in the interlayer 35. The interlayer 35 is supported with one isolating material 36 in order to prevent any mechanical contact between the protrusions 33 and the interlayer 35. Fig. 5 also illustrates alternatives for welding of the metal sheets 31 and 32 together; a weld nugget 37 generated by a resistance spot weld, a weld seam 38 generated by a laser beam process and a weld seam 39 generated by a TIG spot welding process.

In Fig. 6 the metal sheets 41 and 42 are stacked so that the protrusions 43 are partly taken through the holes 44 in the interlayer 45. Any isolating material is not shown. In order to manufacture a tailored product from the component of the invention the metal sheet 41 has a joint 46 to another component 47, and the interlayer 46 has a joint 48 with an interlayer material 49 separated from the interlayer 45 of the component of the invention.

## Claims

1. Method for manufacturing a welded component, where at least one material piece is positioned between metal pieces to be welded together wherein at least one protrusion (5,13,23,33,43) is achieved to at least one of the metal pieces (3,4;11,12;21,22;31,32;41,42) to be welded together, and at least one opening (2,14,24,34,44) is achieved to at least one material piece (1,15,25,35,45) which is positioned between the metal pieces (3,4;11,12;21,22;31,32;41,42) to be welded so that at least one part of the protrusion (5,13,23,33,43) in one of those metal pieces to be welded together is taken through the opening (2,14,24,34,44) in order to have mechanical contact through the upper end of the protrusion (5,13,23,33,43) with the second metal piece to be welded, and welding (37,38,39) of the metal pieces together is carried out by focusing the weld effect to the surface of the second metal piece which is in connection with the protrusion to the first metal piece to be welded **characterized in that** the at least one material piece (1,15,25,35,45) which is positioned between the metal pieces (3,4;11,12;21,22;31,32;41,42) to be welded is isolated with an isolation material (16,17;26;36) from the metal pieces to be welded (3,4;11,12;21,22;31,32;41,42).

2. Method according to the claim 1, **characterized in that** the protrusion (5,13,23,33,43) is manufactured by a forming process such as injection, clinching, spiring, expanding or hydroforming.

3. Method according to the claim 1 or 2, **characterized in that** the opening (2,14,24,34,44) in the material piece (1,15,25,35,45) is manufactured by stamping, punching, boring, cutting or thermal cutting, laser beam or plasma jet and plasma beam.

4. Method according to any of the preceding claims, **characterized in that** the welding of the metal pieces (3,4;11,12;21,22;31,32;41,42) together is carried out by thermal joining processes such as resistance welding (37), TIG-spot welding (39) or beam welding processes such as laser beam welding (38) or electron beam welding.

5. Method according to any of the preceding claims, **characterized in that** isolating material (16,17;26;36) is distributed on the surface of the interlayer in order to prevent the contact between the material piece and the protrusion.

6. Method according to any of the preceding claims, **characterized in that** isolating material (16,17;26;36) is a polymer, fluidity adhesive, a bonding tape, a tape with impregnated fleece material, plastic isolating material or ceramic material.

7. Method according to any of the preceding claims, **characterized in that** the metal pieces (3,4;11,12;21,22;31,32;41,42) to be welded together in accordance with the invention are made of coated steel, stainless steel, aluminium, magnesium, copper or brass.

8. Method according to any of the preceding claims, **characterized in that** the material piece (1,15,25,35,45) is made of metal-based material, such as coated steel, stainless steel, aluminium, magnesium, copper or brass, a fiber composite or a cement plate or a ceramic material.

9. Method according to any of the preceding claims, **characterized in that** the protrusion (5,13,23,33,43) is shaped as a cone, a pin, a taper or any other geometry useful for achieving a mechanical contact with the other metal piece to be welded.

10. Use of the component comprising at least one metal piece having at least one protrusion providing mechanical contact through an upper end of the protrusion with a second metal piece to which the at least one metal piece is welded, wherein at least one part of the protrusion in the at least one metal piece is taken through an opening in an at least one material piece positioned between the welded metal pieces manufactured according to the method of the claim 1 as a connection part or as a joining area in a passenger car, a railway vehicle car, an agricultural machine, a bus or in a truck, aerospace solutions and in a space flight solutions, **characterized in that** the at least one material piece (1,15,25,35,45) which is positioned between the welded metal pieces (3,4;11,12;21,22;31,32;41,42) is isolated with an isolation material (16,17;26;36) from the welded metal pieces (3,4;11,12;21,22;31,32;41,42).

11. Use of the component comprising at least one metal piece having at least one protrusion providing mechanical contact through an upper end of the protrusion with a second metal piece to which the at least one metal piece is welded, wherein at least one part of the protrusion in the at least one metal piece is taken through an opening in an at least one material piece positioned between the welded metal pieces manufactured according to the method of the claim 1 as an adaptation member (46,48) to be connected to at least one other component, **characterized in that** the at least one material piece (1,15,25,35,45) which is positioned between the welded metal pieces (3,4;11,12;21,22;31,32;41,42) is isolated with an isolation material (16,17;26;36) from the welded metal pieces (3,4;11,12;21,22;31,32;41,42).

## Patentansprüche

1. Verfahren zur Herstellung eines geschweißten Bauteils, bei dem mindestens ein Materialstück zwischen den zusammenzuschweißenden Metallstücken positioniert wird, wobei mindestens ein Vorsprung (5, 13, 23, 33, 43) an mindestens einem der zusammenzuschweißenden Metallstücke (3, 4, 11, 12; 21, 22; 31, 32; 41, 42) erreicht wird, und mindestens eine Öffnung (2, 14, 24, 34, 44) wird an mindestens einem Materialstück (1, 15, 25, 35, 45) erreicht, das zwischen den zusammenzuschweißenden Metallstücken (3, 4; 11, 12; 21, 22; 31, 32, 41, 42) positioniert ist; sodass mindestens ein Teil des Vorsprungs (5, 13, 23, 33, 43) in einem der zusammenzuschweißenden Metallteile durch die Öffnung (2, 14, 24, 34, 44) genommen wird, um durch das obere Ende des Vorsprungs (5, 13, 23, 33, 43) mit dem zweiten zu schweißenden Metallstück in mechanischen Kontakt zu kommen, und das Zusammenschweißen (37,38, 39) der Metallteile wird durchgeführt, indem der Schweißeffekt auf die Oberfläche des zweiten Metallteils fokussiert wird, die in Verbindung mit dem Vorsprung zum ersten zu schweißenden Metallteil steht, **dadurch gekennzeichnet, dass** das mindestens eine Materialteil (1, 15, 25, 35, 45), das zwischen den Metallstücken (3, 4, 11,12;21,22;31,32;41,42) angeordnet ist, mit einem Isolationsmaterial (16,17;26;36) von den zu schweißenden Metallstücken (3,4;11,12;21,22;31,32;41,42) isoliert ist.

2. Verfahren nach Anspruch 1, **dadurch gekennzeichnet, dass** der Vorsprung (5, 13, 23, 33, 43) durch ein Formgebungsverfahren, wie Einspritzen, Durchsetzfügen, Eindrücken, Expandieren oder Hydroformen, hergestellt wird.

3. Verfahren nach Anspruch 1 oder 2, **dadurch gekennzeichnet, dass** die Öffnung (2, 14, 24, 34, 44) im Materialstück (1, 15, 25, 35, 45) durch Stanzen, Lochen, Bohren, Schneiden oder thermisches Schneiden, Laserstrahl oder Plasmastrahl und Plasmastrahl hergestellt wird.

4. Verfahren nach einem der vorherigen Ansprüche, **dadurch gekennzeichnet, dass** das Zusammenschweißen der Metallteile (3, 4; 11, 12; 21, 22; 31, 32; 41, 42) durch thermische Fügeverfahren, wie z.B. Widerstandsschweißen (37), TIG-Punktschweißen (39) oder Strahlschweißverfahren, wie z.B. Laserstrahlschweißen (38) oder Elektronenstrahlschweißen, durchgeführt wird.

5. Verfahren nach einem der vorherigen Ansprüche, **dadurch gekennzeichnet, dass** isolierendes Material (16, 17; 26; 36) auf der Oberfläche der Zwischenschicht verteilt wird, um den Kontakt zwischen dem Materialstück und dem Vorsprung zu verhindern.

6. Verfahren nach einem der vorherigen Ansprüche, **dadurch gekennzeichnet, dass** das Isoliermaterial (16, 17; 26; 36) ein Polymer, Fließkleber, ein Klebeband, ein Band mit imprägniertem Vliesmaterial, Kunststoffisoliermaterial oder Keramikmaterial ist.

7. Verfahren nach einem der vorherigen Ansprüche, **dadurch gekennzeichnet, dass** die gemäß der Erfindung zusammenzuschweißenden Metallteile (3, 4; 11, 12; 21, 22; 31, 32; 41, 42) aus beschichtetem Stahl, Edelstahl, Aluminium, Magnesium, Kupfer oder Messing hergestellt werden.

8. Verfahren nach einem der vorherigen Ansprüche, **dadurch gekennzeichnet, dass** das Materialstück (1,15,25,35,45) aus einem Material auf Metallbasis, wie beschichtetem Stahl, Edelstahl, Aluminium, Magnesium, Kupfer oder Messing, einem Faserverbundwerkstoff oder einer Zementplatte oder einem keramischen Material hergestellt wird.

9. Verfahren nach einem der vorherigen Ansprüche, **dadurch gekennzeichnet, dass** der Vorsprung (5, 13, 23, 33, 43) als Kegel, Stift, Konus oder jede andere Geometrie geformt wird, die zur Erzielung eines mechanischen Kontakts mit dem anderen zu schweißenden Metallteil nützlich ist.

10. Verwendung des Bauteils, das mindestens ein Metallteil mit mindestens einem Vorsprung umfasst, der durch ein oberes Ende des Vorsprungs einen mechanischen Kontakt mit einem zweiten Metallteil herstellt, an das das mindestens eine Metallteil geschweißt ist, wobei mindestens ein Teil des Vorsprungs in dem mindestens einen Metallteil durch eine Öffnung in einem mindestens einen Materialteil geführt wird, das zwischen den nach dem Verfahren des Anspruchs 1 hergestellten geschweißten Metallteilen angeordnet ist, als Verbindungsteil oder als Verbindungsbereich in einem Personenkraftwagen, einem Schienenfahrzeugwagen, einer landwirtschaftlichen Maschine, einem Bus oder in einem Lastwagen, Luft- und Raumfahrtlösungen und in einer Raumfahrtlösung, **dadurch gekennzeichnet, dass** das mindestens eine Materialstück (1, 15, 25, 35, 45), das zwischen den geschweißten Metallstücken (3, 4; 11, 12; 21, 22; 31, 32; 41, 42) mit einem Isolationsmaterial (16, 17; 26; 36) von den geschweißten Metallstücken (3, 4; 11, 12; 21, 22; 31, 32; 41, 42) isoliert ist.

11. Verwendung des Bauteils, das mindestens ein Metallteil mit mindestens einem Vorsprung umfasst, der durch ein oberes Ende des Vorsprungs einen mechanischen Kontakt mit einem zweiten Metallteil bereitstellt, an das das mindestens eine Metallteil geschweißt ist, wobei mindestens ein Teil des Vorsprungs in dem mindestens einen Metallstück durch eine Öffnung in einem mindestens einen Materialstück, das zwischen den geschweißten Metallstücken, die nach dem Verfahren des Anspruchs 1 hergestellt sind, positioniert ist, als Anpassungselement (46, 48) genommen wird, um mit mindestens einem anderen Bauteil verbunden zu werden, **dadurch gekennzeichnet, dass** das mindestens eine Materialstück (1, 15, 25, 35, 45), das zwischen den geschweißten Metallstücken (3, 4, 11, 12; 21, 22; 31, 32; 41, 42) positioniert ist; mit einem Isolationsmaterial (16, 17; 26; 36) von den geschweißten Metallstücken (3, 4; 11, 12; 21, 22; 31, 32; 41, 42) isoliert ist.

## Revendications

1. Procédé de fabrication d'un composant soudé, dans lequel au moins une pièce de matériau est positionnée entre des pièces métalliques devant être soudées ensemble, dans lequel au moins une saillie (5, 13, 23, 33, 43) est réalisée sur au moins l'une des pièces métalliques (3, 4 ; 11, 12 ; 21, 22 ; 31, 32 ; 41, 42) devant être soudées ensemble, et au moins une ouverture (2, 14, 24, 34, 44) est réalisée sur au moins une pièce matériau (1, 15, 25, 35, 45) qui est positionnée entre les pièces métalliques (3, 4 ; 11, 12 ; 21, 22 ; 31, 32 ; 41, 42) devant être soudées de sorte qu'au moins une partie de la saillie (5, 13, 23, 33, 43) dans l'une de ces pièces métalliques devant être soudées ensemble est prise à travers l'ouverture (2, 14, 24, 34, 44) de façon à avoir un contact mécanique à travers l'extrémité supérieure de la saillie (5, 13, 23, 33, 43) avec la seconde pièce métallique devant être soudée, et le soudage (37, 38, 39) des pièces métalliques ensemble est réalisé par focalisation de l'effet de soudure à la surface de la seconde pièce métallique qui est en connexion avec la saillie à la première pièce métallique devant être soudée **caractérisé en ce que** l'au moins une pièce métallique (1, 15, 25, 35, 45) qui est positionnée entre les pièces métalliques (3, 4 ; 11, 12 ; 21, 22 ; 31, 32 ; 41, 42) devant être soudées est isolée à l'aide d'un matériau d'isolation (16, 17 ; 26 ; 36) des pièces métalliques devant être soudées (3, 4 ; 11, 12 ; 21, 22 ; 31, 32 ; 41, 42).

2. Procédé selon la revendication 1, **caractérisé en ce que** la saillie (5, 13, 23, 33, 43) est fabriquée au moyen d'un processus de formation telle que l'injection, le clinchage, le spiralage, l'expansion ou le formage hydraulique.

3. Procédé selon la revendication 1 ou 2, **caractérisé en ce que** l'ouverture (2, 14, 24, 34, 44) dans la pièce de matériau (1, 15, 25, 35, 45) est fabriquée by estampage, poinçonnage, perforation, découpage ou découpage thermique, faisceau laser ou jet de plasma et faisceau de plasma.

4. Procédé selon l'une quelconque des revendications précédentes, **caractérisé en ce que** le soudage des pièces métalliques (3, 4 ; 11, 12 ; 21, 22 ; 31, 32 ; 41, 42) ensemble est réalisé par des processus d'assemblage thermique tels que le soudage par résistance (37), le soudage par points TIG (39) ou par des procédés de soudage par faisceau tels que le soudage par faisceau laser (38) ou le soudage par faisceau électronique.

5. Procédé selon l'une quelconque des revendications précédentes, **caractérisé en ce que** le matériau d'isolation (16, 17 ; 26 ; 36) est distribué sur la surface de la couche intermédiaire de façon à empêcher le contact entre la pièce de matériau et la saillie.

6. Procédé selon l'une quelconque des revendications précédentes, **caractérisé en ce que** le matériau d'isolation (16, 17 ; 26 ; 36) est un polymère, un adhésif de fluidité, un ruban adhésif, un ruban comportant un matériau en toison imprégné, un matériau isolant en plastique ou un matériau céramique.

7. Procédé selon l'une quelconque des revendications précédentes, **caractérisé en ce que** les pièces métalliques (3, 4 ; 11, 12 ; 21, 22 ; 31, 32 ; 41, 42) devant être soudées ensemble conformément à l'invention sont constituées d'acier revêtu, d'acier inoxydable, d'aluminium, de magnésium, de cuivre ou de laiton.

8. Procédé selon l'une quelconque des revendications précédentes, **caractérisé en ce que** la pièce de matériau (1, 15, 25, 35, 45) est constituée d'un matériau à base de métal, tel que l'acier revêtu, l'acier inoxydable, l'aluminium, le magnésium, le cuivre ou le laiton, d'un matériau composite renforcé par des fibres ou par une plaque de ciment ou d'un matériau céramique.

9. Procédé selon l'une quelconque des revendications précédentes, **caractérisé en ce que** la saillie (5, 13, 23, 33, 43) en forme de cône, d'épingle, de forme effilée ou de tout autre géométrie utile pour obtenir un contact mécanique avec l'autre pièce métallique devant être soudée.

10. Utilisation du composant comprenant au moins une pièce métallique ayant au moins une saillie fournissant un contact mécanique à travers une extrémité supérieure de la saillie avec une seconde pièce métallique à laquelle l'au moins une pièce métallique est soudée, dans laquelle au moins une partie de la saillie dans l'au moins une pièce métallique est prise à travers une ouverture dans au moins une pièce de matériau positionnée entre les pièces métalliques soudées fabriquées selon le procédé de la revendication 1 en tant que partie de connexion ou en tant que zone de jonction dans une voiture de voyageurs, une voiture de véhicule ferroviaire, une machine destinée à l'agriculture, un bus ou dans un camion, des solutions aérospatiales et dans des solutions de vol spatial, **caractérisée en ce que** l'au moins une pièce de matériau (1, 15, 25, 35, 45) qui est positionnée entre les pièces métalliques soudées (3, 4 ; 11, 12 ; 21, 22 ; 31, 32 ; 41, 42) est isolée à l'aide d'un matériau d'isolation (16, 17 ; 26 ; 36) des pièces métalliques soudées (3, 4 ; 11, 12 ; 21, 22 ; 31, 32 ; 41, 42).

11. Utilisation du composant comprenant au moins une pièce métallique ayant au moins une saillie fournissant un contact mécanique à travers une extrémité supérieure de la saillie avec une seconde pièce métallique à laquelle l'au moins une pièce métallique est soudée, dans laquelle au moins une partie de la saillie dans l'au moins une pièce métallique est prise à travers une ouverture dans au moins une pièce de matériau positionnée entre les pièces métalliques soudées fabriquées selon le procédé de la revendication 1 en tant qu'élément d'adaptation (46, 48) devant être relié à au moins un autre composant, **caractérisé en ce que** l'au moins une pièce métallique (1, 15, 25, 35, 45) qui est positionnée entre les pièces métalliques soudées (3, 4 ; 11, 12 ; 21, 22 ; 31, 32 ; 41, 42) est isolée à l'aide d'un matériau d'isolation (16, 17 ; 26 ; 36) des pièces métalliques soudées (3, 4 ; 11, 12 ; 21, 22 ; 31, 32 ; 41, 42).
